Europäisches Patentamt

European Patent Office

Office européen des brevets

(19)

(11) Publication number: **0 147 241**
**A2**

(12) **EUROPEAN PATENT APPLICATION**

(21) Application number: **84309149.7**

(22) Date of filing: **28.12.84**

(51) Int. Cl.⁴: **H 02 J 7/04**
**H 01 M 10/44**
**//H02J7/10**

(30) Priority: **30.12.83 US 567262**

(43) Date of publication of application:
**03.07.85 Bulletin 85/27**

(84) Designated Contracting States:
**AT FR GB NL SE**

(71) Applicant. **ALEXANDER MANUFACTURING COMPANY**

**Mason City, Iowa(US)**

(72) Inventor: **Alexander, Richard B.**
**018 Harbourage**
**Clear Lake Iowa 50428(US)**

(72) Inventor: **Kindschuh, Dennis P.**
**103 Crestmore Way**
**Mason City Iowa 50401(US)**

(74) Representative: **Rees, David Christopher et al,**
**Kilburn & Strode 30 John Street**
**London WC1N 2DD(GB)**

(54) **Method and apparatus for charging a nickel-cadmium battery.**

(57) A method and apparatus for charging nickel-cadmium batteries. The characteristic voltage-versus-time curve for a nickel-cadmiuum battery on a fast charge, e.g., being charged at the C/1 rate, increases to a peak voltage and thereafter decreases. To ensure that the battery is fully charged, the fast charge is discontinued on the decreasing portion of the voltage-versus-time curve. The fast charge may be stopped when a predetermined negative rate of change of the voltage is obtained, or the fast charge is cut off when the battery voltage decreases by a predetermined amount below the peak, that is, when the difference between the maximum measured battery voltage and the present battery voltage exceeds a set value. After the fast charge is discontinued, a trickle charge, e.g., a C/10 charge or less, is instituted or the charging current is interrupted altogether, i.e., the battery charging circuit may be opened.

EP 0 147 241 A2

The invention relates to a method and an apparatus for charging a nickel-cadmium battery.

Rechargeable nickel-cadmium batteries are presently used in a number of industrial and consumer applications, for example, in communications (such as FM transceivers), medical, photographic, and battery analysis equipment. When recharged, a high battery charging rate is desirable in order to reduce the charging time and, therefore, the time a battery is out of service. Nickel-cadmium (Ni-Cd) batteries are known which are able to withstand a relatively high charging rate. In a conventional fast charge, a current that is numerically equal in amperes to the battery capacity C, in ampere-hours, is supplied to the battery for approximately one hour. This rate is commonly referred to as the C/1 rate. As the battery reaches full charge, the charging rate is reduced or charging is stopped. It is important to control the cutoff of charging so as to assure, on the one hand, that the battery has been fully charged, but to prevent, on the other hand, over-charging which may damage the battery cells.

A known method for battery charging is to apply a fast charge while monitoring the increase in battery voltage, until a predetermined battery voltage is reached. Voltage monitoring methods are unreliable inasmuch as the battery voltage during charging depends upon the condition of the battery prior to instituting the charge and the ambient conditions during the charge, not just the time from the beginning of the charge.

Therefore, by controlling the charging cutoff responsive to voltage, a battery can be over-charged or may not be fully charged upon termination of the high charge rate.

"Eveready" have proposed, in an article entitled "'Eveready' Fast Charge of Nickel-Cadmium Cells" that highrate charging of fast-charge Ni-Cd batteries be controlled by monitoring battery temperature. As noted therein, at the C/1 rate, the battery temperature increases rapidly as the battery approaches full charge, since the electrical energy supplied to the battery is not converted and stored chemically in the battery but changed into heat.

This rapid temperature increase, indicative of full charge, is used to control the cut-off of a high charging rate, or fast charge, applied to a fast-charge Ni-Cd battery. Several temperature monitoring methods are described. In one temperature monitoring method, the fast charge is stopped when a predetermined battery temperature is exceeded. In another temperature monitoring method, the fast charge is stopped when the rate of change of the battery temperature exceeds a specified value. Both temperature monitoring methods suffer from the need to employ a temperature sensor in close proximity to the battery, which necessitates additional terminals and connections, and additional expense. Moreover, the temperature monitoring methods may be inaccurate bacause the battery temperature will be a function of and will change with the ambient temperature. Furthermore, temperature sensors generally respond more slowly than sensors for electrical parameters.

It is an object of the present invention to provide for a nickel-cadmium battery to receive a full charge without a large rise in the temperature of the battery.

It is a further object of the present invention to provide a method and apparatus for rapidly charging Ni-Cd batteries, which reliably and accurately determines and terminates the high-rate charging at a full battery charge, without the need for temperature sensors or temperature-responsive control equipment.

According to one aspect of the invention, there is provided a method for charging a nickel-cadmium battery, comprising the steps of: supplying a first current to the battery; monitoring the battery voltage; and characterised in that in dependence upon the monitored battery voltafe, interrupting the first current after the monitored battery voltage has reached a peak value and is detected as descending therefrom.

According to another aspect of the invention, there is provided apparatus for charging a nickel-cadmium battery, comprising: means for supplying a first current to the battery; means for monitoring the battery voltage, characterised by means for interrupting the first current in dependence upon the monitored battery voltage after the monitored battery voltage reaches a peak.

The inventors have recognised that, in view of the fact that Ni-Cd fast-charge batteries have a characteristic voltage-versus-time curve in which the voltage changes from a positive to a negative slope as the battery reaches full charge, a voltage monitoring control method may be employed, utilizing this characteristic positive-to-negative slope, change, to control accurately the charge cutoff point. This may be accomplished with equal accuracy and reliability as previously proposed temperature-responsive controls but with out the need for temperature monitoring equipment.

Preferably, therefore current, at the C/i rate, is supplied to a nickel-cadmium battery, and the current is interrupted and the fast charge is discontinued on the decreasing portion of the characteristic voltage-versus-time curve, i.e., after the peak voltage is reached. The current may be interrupted when either the rate of change of the battery voltage reaches a predetermined negative value or the battery voltage decreases by a predetermined amount below the peak voltage. For instance, for a 12 cell battery rated at 15 volts, 450 milliamp-hours, the fast charge should preferably be discontinued when the battery voltage is 0.3 V below the peak battery voltage. A larger difference, such as 0.45, 0.6 or 0.75 V may be selected, depending upon the type and the number of cells in the battery. Following the interruption of the current associated with the fast charge, the battery may be put on a trickle charge e.g. one tenth of the value of C/1 or less or open circuited, depending upon the type of cell or the application.

In a preferred embodiment of the invention, the battery voltage is measured at a number of sequential points in time, usually, about once every 1 to 3 seconds, to determine, first, when the peak battery voltage is reached and, second, when a predetermined level below the peak is reached, at which time the fast charge is stopped. Preferably, therefore, when the fast charge is instituted, the battery voltage is measured and stored. A short time later, the battery voltage is preferably measured again. If the measured value is greater than the stored value (indicating that the battery voltage is on the increasing portion of the characteristic curve), the measured value is preferably substituted for the stored value, and the measurement and comparision steps are repeated.

When the measured value becomes less than the stored value (usually indicating that the battery voltage is on the decreasing portion of the characteristic curve), the difference between the measured value and the stored value is preferably compared to a set value. If the difference exceeds the setpoint, the fast charge is preferably cut off. In a preferred embodiment of the invention, the set value must be exceeded on two consecutive measurements in order to prevent the fast charge from being stopped because of a spurious noise signal.

Appropriate circuits for accomplishing the above stopes may be provided. For instance, a microprocessor-based circuit is advantageously used to store and compare successive values of the battery voltage in order to determine when the peak voltage is reached and when a predetermined level below the peak is reached.

The invention may overcome the problems associated with known methods and apparatus for charging a nickel-cadmium battery and may permit a nickel-cadmium battery to be more completely charged by interrupting the fast charge on the decreasing portion of the characteristic voltage-versus-time curve.

The invention may be carried into practice in various ways and some embodiments will now be described by way of example with reference to the accompanying drawings, in which:

Figure 1 is a graph showing a characteristic curve of the voltage versus the time on about a C/1 charge for a typical Ni-Cd battery;

Figure 2 is a schematic diagram of a circuit according to an embodiment of the invention; and

Figures 3A-D are flow charts symbolically depicting a method according to an embodiment of the invention.

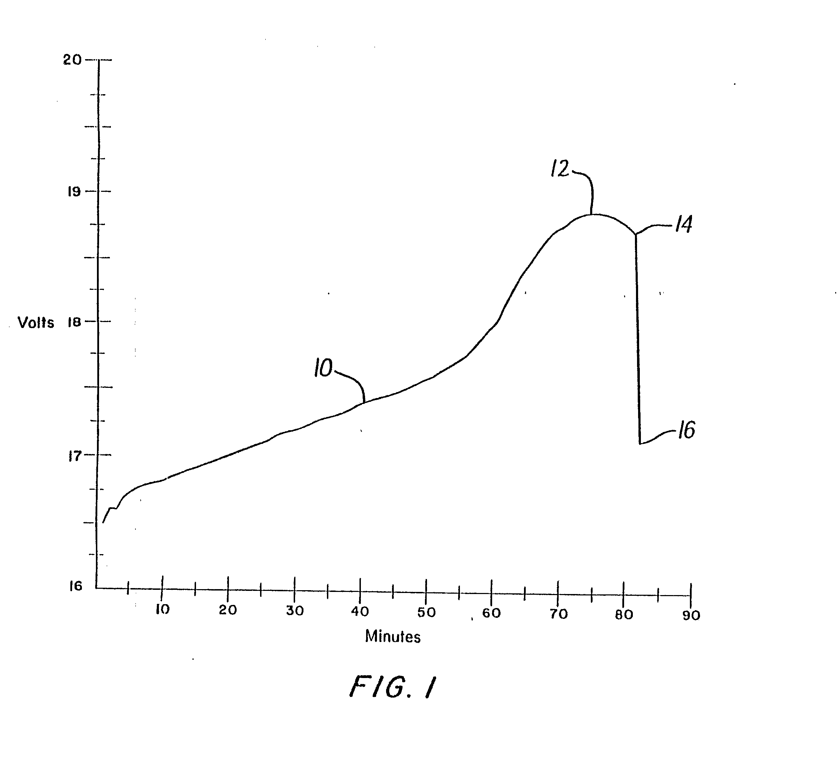

Figure 1 illustrates a typical characteristic curve 10 for nickel-cadmium (Ni-Cd) battery placed on about a C/1 charge. The curve 10 shows the battery voltage (in volts) versus the time on the charge (in minutes) and is a representative curve for a 10-cell Ni-Cd battery rated as 12 volts, 450 milliamperres. The curve for a particular battery or cell depends upond the initial conditions and the ambient conditions during the charge. Moreover, the curve 10 depends upon the charging current; however for ease of explanation and illustration, the invention will hereinafter be described with the fast charge being about a C/1 charge, but the invention encompasses the use of other charging rates. Furthermore, the voltage of a particular battery depends on the number of cells in the battery, the battery voltage being equal to the sum of the voltages of each individual cell.

The voltage-versus-time curve 10 increases, reaches a peak at about 74 minutes, and then decreases as time increases. Although the battery is fully charged at a point 12, which corresponds to the 74-minute mark, the fast charge should be switched off on the decreasing part of the curve 10, i.e., the portion following the point 12, in order to prevent early switching due to spurious noise signals or a premature plateau.

The temperature-versus-time curve for the battery (not shown) increases slowly at the beginning of the charge and then increases rapidly as the battery becomes fully charged. A typical temperature-versus-time curve is illustrated in the "Eveready" article. This phenomenon is due to the battery's inability to convert all of the electrical energy into chemical energy and store it as the battery becomes fully charged; what is not converted into chemical energy is converted into heat, thereby increasing the temperature of the battery.

Accordingly, the C/1 charge should be stopped and the associated current should be interrupted at a point 14 on the decreasing portion of the voltage-versus-time curve 10 before the battery temperature becomes inordinately high. Figure 1 depicts the battery voltage, which drops drastically to a point 16, after the hard charge is switched to a trickle charge at point 14. As indicated above, the time of switching may be ascertained by, first, determining when the battery voltage reaches the peak and, second, determining

8

when the battery voltage decreases a predetermined amount below the peak. Alternatively, the rate of change of the battery voltage may be calculated, and the fast charge may be cutoff when a predetermined negative rate of change of the battery is obtained, since the point 14 is associated with a unique negative slope of the curve 10.

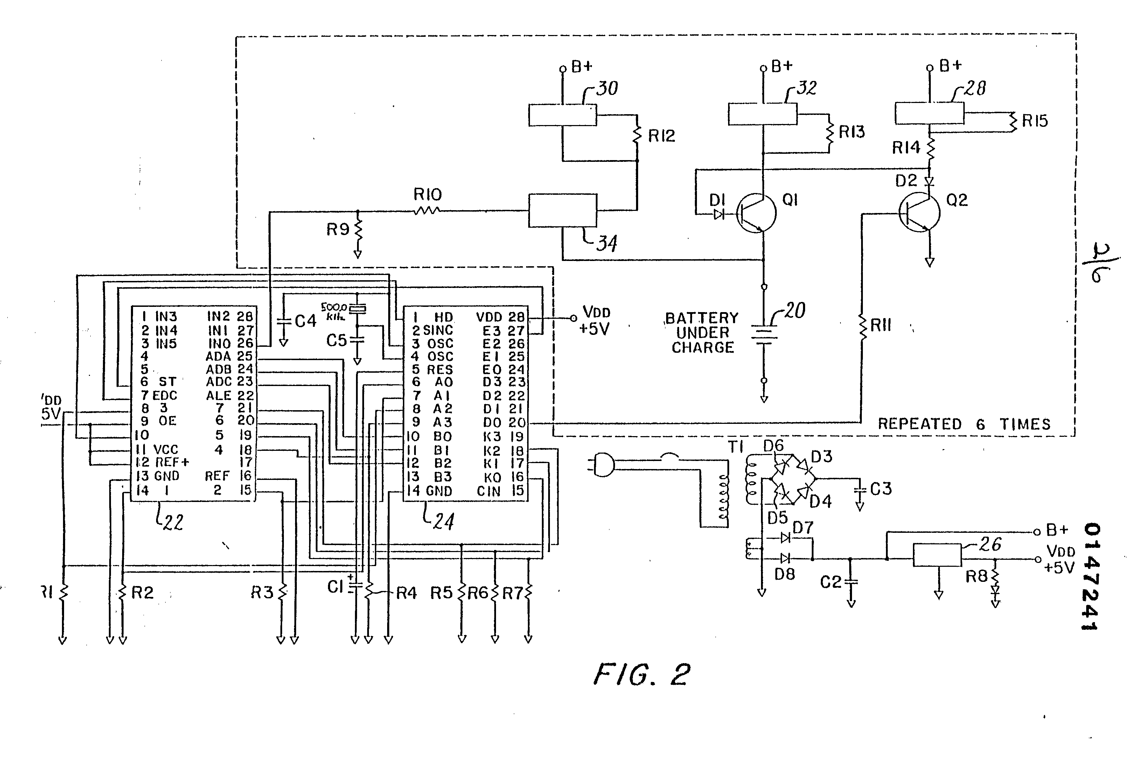

Figure 2 is a schematic diagram of a circuit for providing a fast charge to a Ni-Cd battery and for discontinuing the fast charge when, following the peak, the battery voltage falls a predetermined amount below the peak. The circuit shown in Figure 2 supplies up to six batteries 20 with a high current during a fast charge and monitors the voltages of the batteries during the charge. The values for the circuit components illustrated in Figure 2 are set forth below in Table II.

The section of the circuit shown in the upper right of the drawing, which may be repeated up to 6 times, supplies a high charging current (a hard charge) or a low charging current (a trickle charge) to each battery being charged and isolates the monitoring portion of circuitry from the charging portion of the circuitry. The low charging current is supplied via a voltage regulation circuit 28, e.g., a model no. 78L05. Similarly, a high charging current is supplied through a voltage regulator 32, e.g., a model no. LM317T. The resistance of a resistor R13 is selected so that the high charging current is suitable for the battery. For instance, if the resistor R13 has a value of 2 ohms, the high charging current will be about 600 milliamperes. The monitoring circuit is isolated from the charging circuit by

-8-

# 0147241

way of a voltage regulator 30, which may also be a model no. 78L05, and an isolation relay 34, e.g., a PRMA 1A05.

The section of the circuit shown in the lower right of the drawing provides a voltage of approximately 40 V to the charging and isolation circuits through a terminal B+; this section of the circuit also supplies a +5 volt signal, i.e., VDD, to an analog-to-digital converter (ADC) 22, preferably a National Semiconductor model no. 0808, and a microprocessor 24, preferably an OKI Semiconductor model no. 5842.

The voltages of each of the batteries 20 being charged are supplied to the ADC 22 through the input terminals IN0 through IN6. The ADC 22 may sample each battery voltage as often as once per second or as little as once every three seconds, depending upon the input conditions (assuming a 500-KHz clock rate). Three bits, i.e., terminals B0, B1, and B2, from the microprocessor 24 are used to address an analog multiplexer in the ADC 22 at terminals ADA, ADB, and ADC in order to select one of the six input voltages for conversion to a 7-bit binary value. The ADC 22 supplies the 7-bit binary representation of the selected battery voltage to the microprocessor 24 over the lines leading from the terminals 1 through 7 of the ADC 22 to the terminals A0-A3 and K0-K2 of the microprocessor 24. The ADC 22 does not provide the microprocessor 24 with the least significant bit of the converted analog voltage. Accordingly, for an input range of 5 volts, one binary increment from the ADC 22 corresponds to 39.1 millivolts, and for a 20-volt range, one binary increment of the ADC 22 is about 156 millivolts.

-9-

10

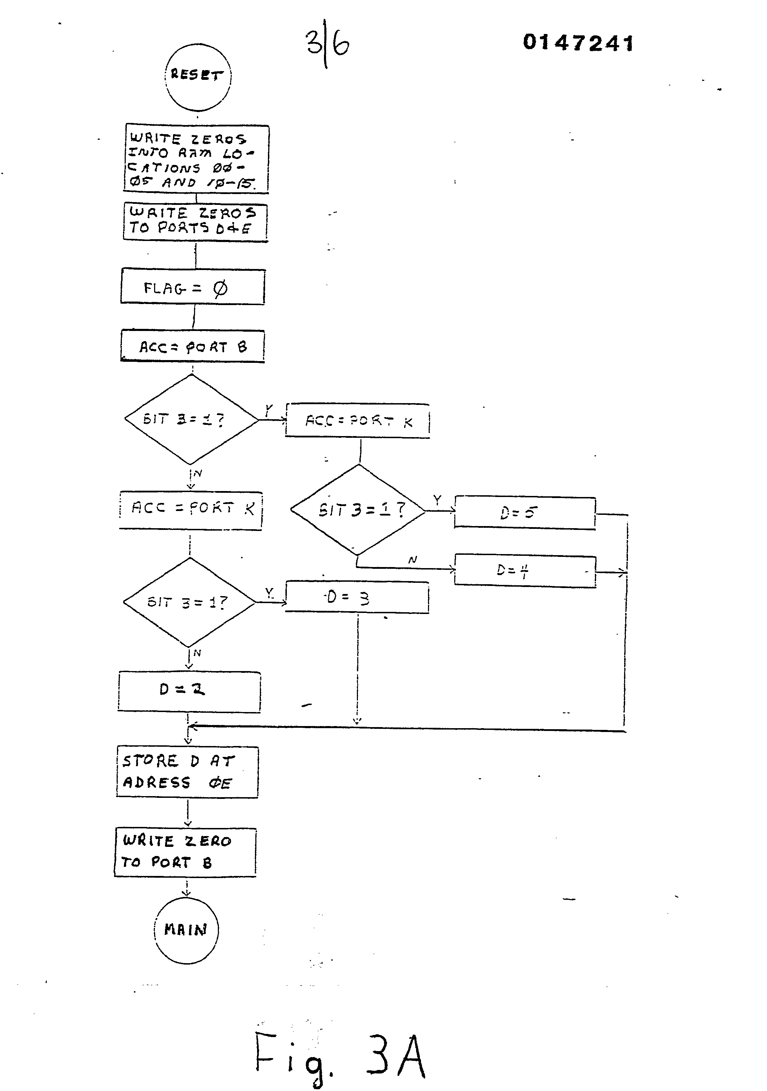

Each 7-bit value from the ADC 22 is assigned to two random access memory (RAM) locations (a total of 8 bits) in the microprocessor 24. The highest value read from each input is stored in 7 of the 8 bits. The processing and comparison steps performed in the microprocessor 24 will be described in detail below, with reference to Figures 3A-D. However, in order to better understand the device, the output of the microprocessor will now be described: When the circuit determines that the high charge for a particular battery should be discontinued, a high output is selectively provided at one of the output terminals D0-D3 or E0-E1. The high output signal turns a transistor Q2 on, which causes a transistor Q1 to turn off, thereby switching from a hard charge to a trickle charge. This action of the transistor Q2 also energizes a green light-emitting diode D2 and deenergizes a red light-emitting diode D1. To ensure against false triggering of the low current charging mode due to transient irregularities which may occur, the circuit shown in Figure 2 does not supply the output signal until the second consecutive time that the setpoint is exceeded.

A typical setpoint for the circuit depicted in Figure 2 is 2 binary increments, which corresponds to approximately 0.3 volts on the 20-volt range. But, depending upon the battery and the application, other setpoints may be selected, e.g., setpoints of 3, 4, or 5 binary increments corresponding to approximately 0.45, 0.6, or 0.75 volts, respectively. In the circuit illustrated, terminal 3 of port B and terminal 3 of port K are used to select the desired setpoint in accordance with the table below:

\|)

TABLE I

| No. Of Increments | Volts In 20-V Range | Port B Bit 3 | Port K Bit 3 |
|---|---|---|---|
| 2 | 0.3 | 0 | 0 |
| 3 | 0.45 | 1 | 0 |
| 4 | 0.6 | 0 | 1 |
| 5 | .0.75 | 1 | 1 |

Figures 3A-D are flowcharts symbolically depicting the operation of the microprocessor 24. Specifically, Figure 3A illustrates the initialization routine of the microprocessor. The initialization routine accomplishes the following: (a) clears the RAM locations in which the digital representations of the battery voltages will be stored; (b) sets a counter W, which determines the particular battery voltage to be converted to digital form and supplied to the microprocessor, to 0; (c) clears ports D and E, the terminals which are used to supply output signals for switching to a trickle charge; (d) determines the value of the setpoint D and stores it; and (e) clears port B, which is used to control the multiplexer in the ADC 22.

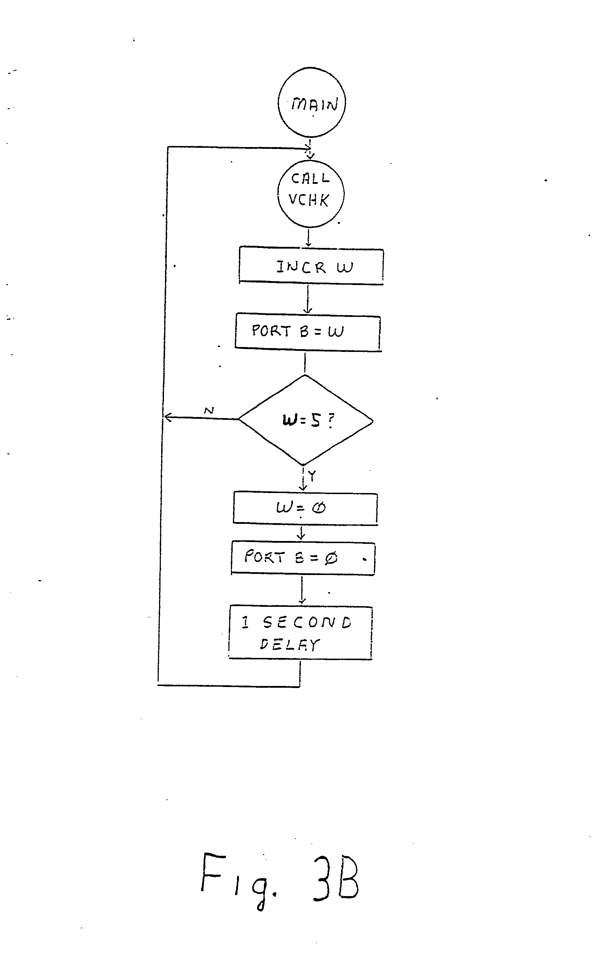

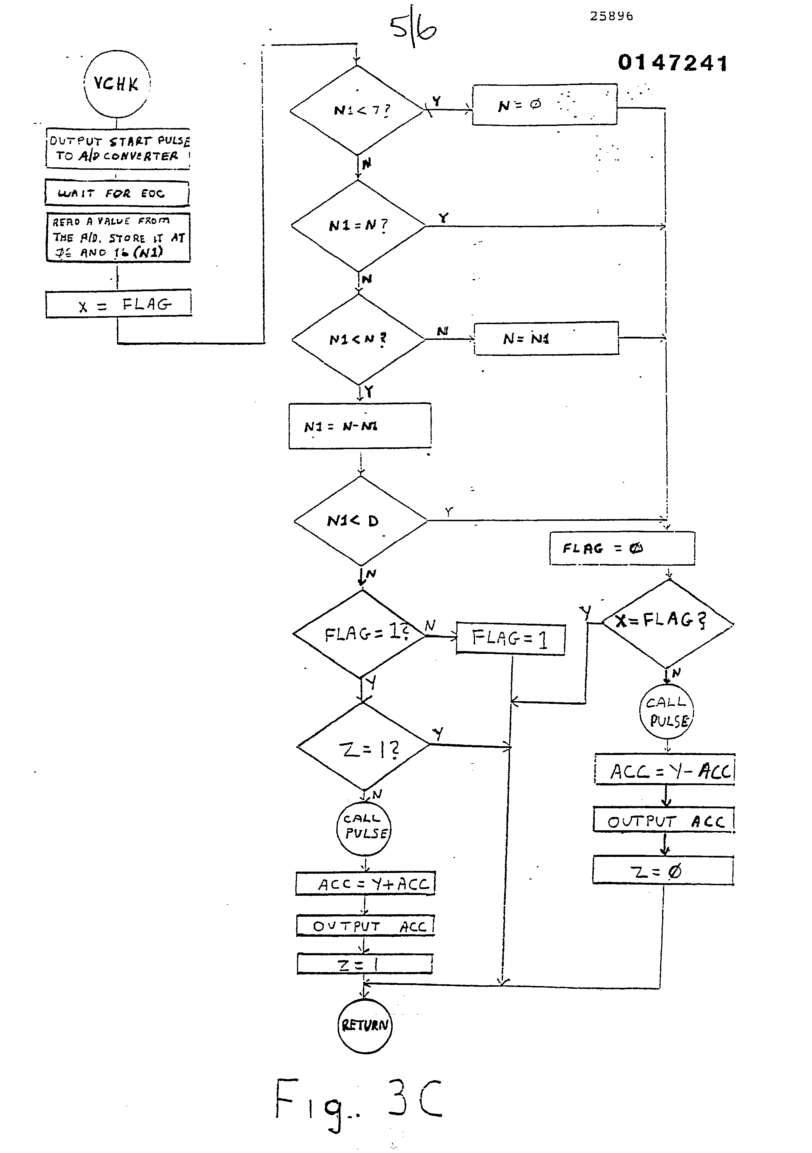

After the initialization routine is completed, the MAIN program loop (see Figure 3B) is entered. The MAIN program loop maintains the W counter; specifically, it increments the counter W by 1 following the voltage comparison steps, so that the voltage comparison steps are performed serially for each of the batteries being charged. During the MAIN program loop a subroutine VCHK, the flowchart of which is shown in Fig. 3C, is called. This subroutine uses the value

-11-

of W as a pointer to the RAM locations corresponding to the input battery voltage selected by port B. Each time the program returns from the VCHK subroutine, the counter W is incremented by 1 and then output to port B, thereby sequentially selecting the next battery voltage via the multiplexer in the ADC 22. When the value W reaches 6, that is, after all of the battery voltages have been sampled, the value W and the port B are reset to 0, and the microprocessor waits for 1 second before repeating the sequential sampling operation.

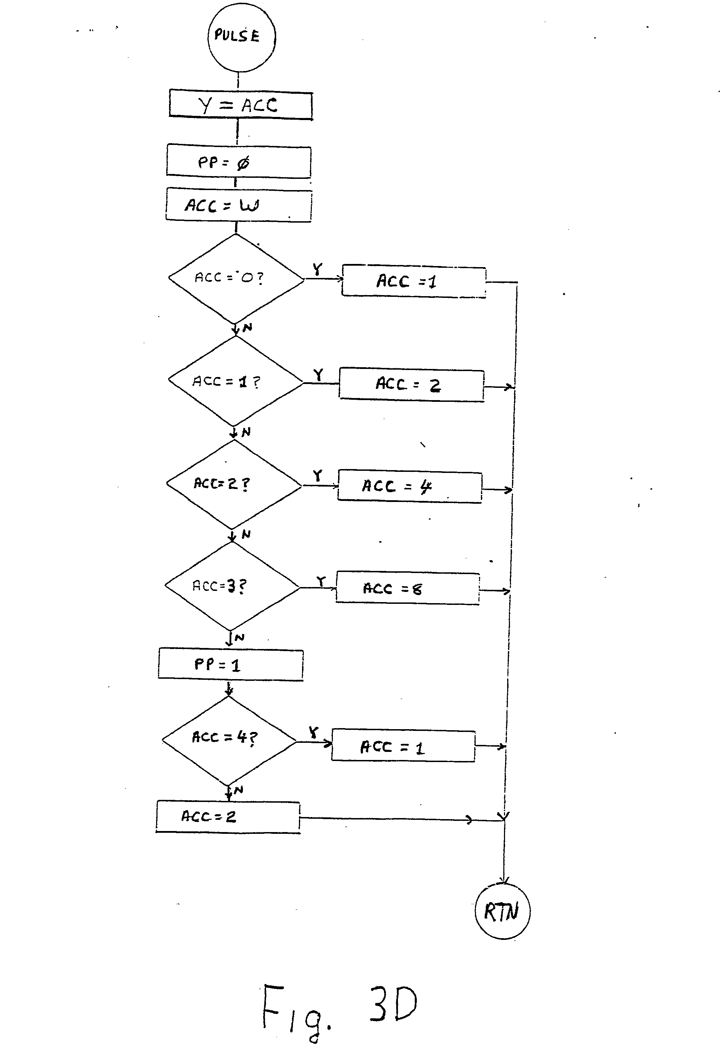

The subroutine VCHK performs various comparison operations on the binary representation of the battery voltage provided by the ADC 22. If the newly measured value, N1, is less than the binary value corresponding to 7, zeros are written in the corresponding RAM locations for the particular battery. If not, the new value, N1, is compared with a previously measured value, N. The new value, N1, is stored in place of the old value, N, when N1 is greater than N, which occurs on the increasing part of the voltage-versus-time curve. But when N1 is less than N, which occurs on the decreasing part of the voltage-versus-time curve, the difference is compared to the setpoint D. After the difference is greater than the setpoint on two consecutive occasions, the PULSE subroutine, shown in Figure 3D, is called.

The PULSE subroutine determines which one of the output terminals D0-D3 or E0-E1 should be switched from low to high or from high to low. Low-to-high switching turns on one of the transistors Q2 to initiate a trickle charge for a particular battery. High-to-low switching takes place when the battery is removed after being fully charged. Each bit

-12-

of the variable ACC corresponds to one of the output terminals D0-D3 and E0-E1 and determines whether the output signal at the terminal will be high (when the corresponding bit is 1) or low (when the corresponding bit is 0). Accordingly, the PULSE subroutine determines which output terminal to switch by storing the old value of ACC in the Y location, ascertaining the value of the counter W, and setting the variable ACC equal to the binary value corresponding to the battery to be switched. Following the return to the VCHK subroutine, the new value of ACC is added (low-to-high switching) or subtracted (high-to-low switching) to the old value of ACC, which is stored in the Y location. Then, the value of ACC is output to effect the switching.

TABLE II

| | |
|---|---|
| R1 | 100 kilohms |
| R2 | 100 kilohms |
| R3 | 100 kilohms |
| R4 | 100 kilohms |
| R5 | 100 kilohms |
| R6 | 100 kilohms |
| R7 | 100 kilohms |
| R8 | 270 ohms |
| R9 | 10 kilohms |
| R10 | 39 kilohms |
| R11 | 10 kilohms |
| R12 | 510 ohms |
| R13 | 2 ohms |
| R14 | 510 ohms |

0147241

14

<u>TABLE II</u> (cont'd)

| | |
|---|---|
| R15 | 270 ohms |
| C1 | 68 microfarads |
| C2 | 3300 microfarads |
| C3 | 5400 microfarads |
| C4 | 47 picofarads |
| C5 | 47 picofarads |
| Q1 | 2N5190 |
| Q2 | D33D24 |
| D1 | MV5752 |
| D2 | MV64521 |
| D3 | ECG 5312 |
| D4 | ECG 5312 |
| D5 | ECG 5312 |
| D6 | ECG 5312 |
| D7 | ECG R250 |
| D8 | ECG R250 |
| T1 | NT4149 |

Although the invention has been described herein with respect to specific embodiments thereof, it will be understood that various modifications and variations may be made thereto without departing from the inventive concepts disclosed. All such modifications and variations are intended to be included within the spirit and scope of the appended claims.

-14-

# CLAIMS.

1. A method for charging a nickel-cadmium battery, comprising the steps of: supplying a first current to the battery; monitoring the battery voltage; and, characterised in that , in dependance upon the monitored battery voltage, interrupting the first current after the monitored battery voltage has reached a peak value and is detected as descending therefrom.

2. A method as claimed in Claim 1, characterised in that the first current in amperes is substantially equal to the battery capacity in ampere-hours.

3. A method as claimed in Claim 1 or Claim 2, characterised by the further step of supplying a second current to the battery, after the interrupting step, the second current being smaller than the first current.

4. A method as claimed in any of Claims 1 to 3 characterised in that the second current in amperes is substantially equal to or less than one-tenth of the battery capacity in ampere-hours.

5. A method as claimed in any preceeding claim characterised by determining when the battery voltage has decreased by a predetermined amount below the peak, after reaching the peak, whereby the interrupting step constitutes interrupting the first current when the battery voltage has decreased by the predetermined amount.

6. A method as claimed in Claim 5, characterised in that the predetermined amount is approximately 0.3 volts.

7. A method as claimed in Claim 5, characterised in that the predetermined amount is approximately 0.6 volts.

8. The method as claimed in Claim 5, characterised in that the determining step includes:

(a) measuring the battery voltage at a first time to provide a first measured voltage;

(b) storing the first measured voltage to provide a stored voltage;

(c) measuring the battery voltage at a subsequent time to provide a second measured voltage;

(d) comparing the stored voltage with the second measured voltage;

(e) storing the second measured voltage as the stored voltage and repeating substeps (c) and (d) if the second measured voltage is greater than the stored voltage in substep (d); and

(f) comparing the difference between the second measured voltage and the stored voltage to the predetermined amount if the second measured voltage is less than the stored voltage in substep (d).

9. A method as claimed in Claim 8 characterised in that the interrupting step occurs after the differences between the second measured voltage and the stored voltage exceeds the predetermined amount on two consecutive measurements.

10.  A method as claimed in any of Claims 1 to 4 characterised by determining when the battery voltage rate of change reaches a predetermined negative value, whereby the interrupting step constitutes interrupting the first current when the battery voltage rate of change reaches the predetermined negative value.

11.  Apparatus for charging a nickel-cadmium battery, comprising: means for supplying a first current to the battery; and means for monitoring the battery voltage, characterised by means for inerrupting the first current in dependance upon the monitored battery voltage after the monitored battery voltage reaches a peak.

12.  Apparatus as claimed in claim 11 characterised by means for supplying a seconnd current to the battery, the second current being smaller than the first current.

13.  Apparatus as claimed in Claim 11 or Claim 12 characterised by means for determining when the battery voltage has decreased by a predetermined amount below the peak, after reaching the peak whereby the first current can be interrupted after the battery voltage has decreased by the predetermined amount.

14.  Apparatus as claimed in any of Claims 11 to 13 characterised in that the means for determining includes:

means for measuring the battery voltage at a first time to provide a first measured voltage;

means for storing the first measured voltage to provide a stored voltage;

means for measuring the battery voltage at a subsequent time to provide a second measured voltage;

means for comparing the stored voltage with the second measured voltage;

means for storing the second measured voltage as the stored voltage if the second measured voltage is greater than the stored voltage; and

means for comparing the difference between the second measured voltage and the stored voltage to the predetermined amount if the second measured voltage is less than the stored voltage.

15. Apparatus as claimed in Claim 11 or Claim 12 characterised by means for determining when the battery voltage rate of change reaches a predetermined negative value whereby the first current can be interrupted when the battery voltage rate of change reaches the predetermined negative value.

16. Apparatus for charging a plurality of nickel-cadmium batteries, comprising:

means for supplying a current to each of the batteries being charged; and

means for measuring the battery voltage of each battery being charged; characterised by means for sequentially comparing the measured battery voltage of each battery with a criterion;
and means for selectively interrupting the current
to a battery when the criterion for that battery
is met.

17. Apparatus as claimed in claim 16 characterised
in that the means for measuring includes means
for converting the measured battery voltage to
a binary representation of the battery voltage.

18. Apparatus as claimed in Claim 16 or
Claim 17 characterised in that the means for
sequentially comparing includes a mocroprocessor.

FIG. 1

0147241

25896

FIG. 2

RESET

WRITE ZEROS INTO RAM LOCATIONS 0∅0∅5 AND 1∅15.

WRITE ZEROS TO PORTS D&E

FLAG = ∅

ACC = PORT B

BIT 3 = 1? —Y→ ACC = PORT K

BIT 3 = 1? —Y→ D = 5

—N→ D = 4

—N→ ACC = PORT K

BIT 3 = 1? —Y→ D = 3

—N→ D = 2

STORE D AT ADRESS ∅E

WRITE ZERO TO PORT B

MAIN

Fig. 3A

Fig. 3B

Fig. 3C

Fig. 3D